# EUROPEAN PATENT SPECIFICATION

(11) **EP 3 075 231 B1**
(45) Date of publication and mention of the grant of the patent: **17.07.2019**
(21) Application number: 16158688.8
(22) Date of filing: 04.03.2016
(51) Int. Cl.: A01G 7/04

(54) **PLANT GROWTH CONTROL SYSTEM AND METHOD**
PFLANZENWACHSTUMSKONTROLLSYSTEM UND -VERFAHREN
SYSTÈME DE RÉGULATION DE LA CROISSANCE VÉGÉTALE ET PROCÉDÉ

(30) Priority: 31.03.2015 CN 201510145989
(43) Date of publication of application: 05.10.2016
(73) Proprietor: Xiaomi Inc., Beijing 100085 (CN)
(72) Inventor: WU, Ke, Beijing 100085 (CN); LIU, Xinyu, Beijing 100085 (CN)
(74) Representative: Perrot, Emilie

(56) References cited:
- WO-A1-2011/068182
- CN-U- 203 309 650
- DE-B3-102011 105 147
- FR-A3- 2 762 198

## Description

### TECHNICAL FIELD

The present invention relates to the field of plant cultivation, and more particularly, to a plant growth control system and method.

### BACKGROUND

With the improvement of living standards of people, more and more users start cultivating plants at homes or in offices. Because the plant generally grows facing the sun, after a period of time, the side facing the sun of the plant may grow more densely than the side not facing the sun for the reason that light irradiation on the side facing the sun is better.

In order to enable the plant to receive uniform light irradiation, and then to help the plant grow better, the user needs to rotate the flower pot where the plant grows by a certain direction at intervals of a predetermined time period. For example, the user rotates the flower pot by 180 degrees every week.

Document DE 10 2011 105147 B3 describes a method for illuminating plants, document CN 203 309 650 U describes a light-supplementing table lamp for plants, and document FR 2 762 198 A3 describes a plant display system.

### SUMMARY

The present invention provides plant growth control systems according to claims 1 and 3 and methods according to claims 6 and 7. The following technical solutions may be employed.

According to a first aspect, this disclosure relates to a plant growth control system.

The system comprises: an information collector, a processor connected to the information collector, and a controllable light source; wherein
the information collector is configured to acquire growth information of a plant, the growth information comprising at least one of branch and leaf distribution information of the plant and flower distribution information of the plant; and
the processor is configured to determine, according to the growth information, a target irradiation position of the controllable light source in the plant, and to control the controllable light source to irradiate the target irradiation position in the plant.

Optionally, the information collector comprises at least two light intensity sensors; wherein
the light intensity sensors are configured to acquire light intensities yielded after ambient light penetrates through the plant; and
the processor is further configured to determine the growth information of the plant according to the light intensities acquired by the at least two light intensity sensors.

Optionally, the system further comprises a flower pot, wherein the at least two light intensity sensors are arranged on the edge of the flower pot.

Optionally, the information collector comprises a camera; wherein
the camera is configured to acquire an image containing the plant; and
the processor is further configured to acquire the growth information of the plant according to the image.

Optionally, the controllable light source is in a moving state or a stationary state under control of the processor.

Optionally, the system further comprises a base for accommodating the flower pot, wherein the base is in a rotation state or a stationary state under control of the processor.

Optionally, the system further comprises a human body infrared sensor; wherein
the human body infrared sensor is configured to detect a human body infrared signal in an environment; and
the processor is further configured to, when the human body infrared sensor detects a human body infrared signal, control the controllable light source in a predetermined control manner and/or control the flower pot where the plant grows to rotate, the predetermined control manner comprising adjusting luminance of the controllable light source or controlling the controllable light source to blink.

According to a second aspect, this disclosure relates to a plant growth control method.

The method comprises:
acquiring growth information of a plant, the growth information comprising at least one of branch and leaf distribution information of the plant and flower distribution information of the plant;
determining, according to the growth information, a target irradiation position of the controllable light source in the plant; and
controlling the controllable light source to irradiate the target irradiation position in the plant.

Optionally, the step of acquiring growth information of a plant comprises:
acquiring, by using at least two light intensity sensors arranged at the bottom of the plant, light intensities yielded after ambient light penetrates through the plant; and
determining the growth information of the plant according to at least two light intensities acquired.

Optionally, the step of controlling the controllable light source to irradiate the target irradiation position in the plant comprises:
controlling the controllable light source in an ON state to rotate, and stopping rotation of the controllable light source when the light intensity sensor corresponding to the target irradiation position acquires a light intensity greater than a predetermined light intensity;
or
controlling the controllable light source in an ON state to move, and stopping movement of the controllable light source when the light intensity sensor corresponding to the target irradiation position acquires a light intensity greater than a predetermined light intensity;
or
controlling the flower pot where the plant grows to rotate, and stopping rotation of the flower pot when the light intensity sensor corresponding to the target irradiation position acquires a light intensity greater than a predetermined light intensity.

Optionally, the step of acquiring growth information of a plant comprises:
acquiring, by using a camera, an image containing the plant; and
acquiring the growth information of the plant according to the image.

Optionally, the image further contains the light source, and the step of controlling the controllable light source to irradiate the target irradiation position in the plant comprises:
determining positions of the controllable light source and the target irradiation position relative to each other according to the image;
determining, according to the relative positions, an adjustment angle desired for the controllable light source or the flower pot where the plant grows; and
adjusting the controllable light source or the flower pot according to the adjustment angle.

Optionally, the step of determining, according to the growth information, a target irradiation position of the controllable light source in the plant comprises:
when the growth information comprises the branch and leaf distribution information, determining a side of the plant where a sparse degree of the branch and leaf distribution is less than a first threshold as the target irradiation position of the controllable light source, or determining a side of the plant where a sparse degree of the branch and leaf distribution is greater than a second threshold as the target irradiation position of the controllable light source; and
when the growth information comprises the flower distribution information, determining a side of the plant where flowers are blooming as the target irradiation position of the controllable light source.

Optionally, the method further comprises:
detecting, by using a human body infrared sensor, a human body infrared signal in an environment; and
when the human body infrared signal is detected, controlling the controllable light source in a predetermined control manner and/or control the flower pot where the plant grows to rotate, the predetermined control manner comprising adjusting luminance of the controllable light source or controlling the controllable light source to blink.

In a particular embodiment, the steps of the plant growth control method are determined by computer program instructions.

Consequently, according to a third aspect, the invention is also directed to a computer program for executing the steps of a plant growth control method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided in the embodiments of the present invention may achieve the following beneficial effects:
Growth information of a plant is acquired, a target irradiation position of a controllable light source in the plant is determined according to the growth information, and thus the controllable light source is controlled to irradiate the target irradiation position in the plant. This solves the problem in the related art that a user needs to rotate the flower pot where the plant grows at an interval of a predetermined time period; and achieves the effects of automatically controlling the controllable light source to irradiate a position desiring light irradiation in the plant, and simplifying user's operations.

It shall be appreciated that the above general description and the detailed description hereinafter are only illustrative but not for limiting the present invention.

### BRIEF DESCRIPTION OF THE DRAWINGS

The accompanying drawings herein illustrate embodiments consistent with the present disclosure, and together with the description, serve to explain the principles of the present invention.
Fig. 1 is a schematic structural diagram illustrating a plant growth control system according to an example embodiment of the present disclosure;
Fig. 2A is a schematic structural diagram illustrating a plant growth control system according to another example embodiment of the present disclosure;
Fig. 2B is a schematic diagram illustrating positions where light intensity sensors are arranged on a flower pot according to another example embodiment of the present disclosure;
Fig. 3A is a schematic structural diagram illustrating a plant growth control system according to still another example embodiment of the present disclosure;
Fig. 3B is a schematic diagram illustrating positions of a controllable light source and a target irradiation position relative to each other according to still another example embodiment of the present disclosure;
Fig. 3C is a schematic structural diagram illustrating a plant growth control system according to yet still another example embodiment of the present disclosure;
Fig. 4 is a flowchart illustrating a plant growth control method according to an example embodiment of the present disclosure;
Fig. 5 is a flowchart illustrating a plant growth control method according to another example embodiment of the present disclosure;
Fig. 6 is a flowchart illustrating a plant growth control method according to still another example embodiment of the present disclosure; and
Fig. 7 is a flowchart illustrating a method in an alternative solution of the plant growth control method according to yet still another example embodiment of the present disclosure.

### DETAILED DESCRIPTION

Reference will now be made in detail to example embodiments, examples of which are illustrated in the accompanying drawings. The following description refers to the accompanying drawings in which the same numbers in different drawings represent the same or similar elements unless otherwise represented. The implementations set forth in the following description of example embodiments do not represent all implementations consistent with the present invention. Instead, they are merely examples of systems and methods consistent with aspects related to the present invention as recited in the appended claims.

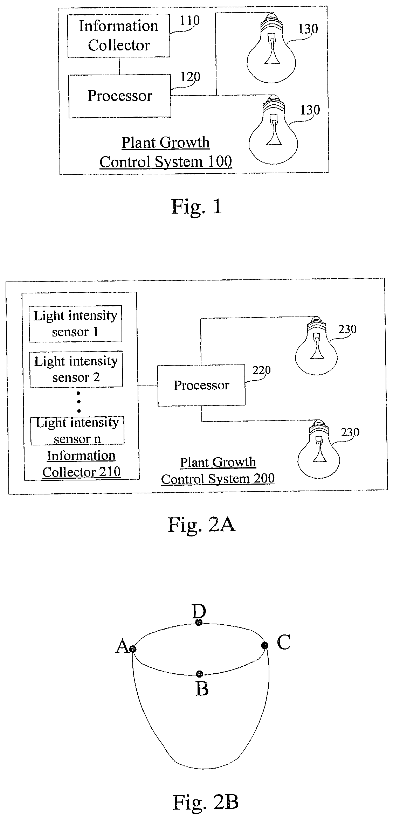

Fig. 1 is a schematic structural diagram illustrating a plant growth control system according to an example embodiment of the present disclosure. The plant growth control system 100 may comprise: an information collector 110, a processor 120 connected to the information collector 110, and at least one controllable light source 130.

The information collector 110 is configured to acquire growth information of a plant, the growth information comprising at least one of branch and leaf distribution information of the plant and flower distribution information of the plant.

The processor 120 is configured to determine, according to the growth information, a target irradiation position of the controllable light source 130 in the plant, and to control the controllable light source 130 to irradiate the target irradiation position in the plant. The controllable light source 130 refers to a light source which may change its irradiation position in the plant. For example, the controllable light source is rotatable in terms of irradiation direction or movable in terms of position, or the plant is rotatable relative to the position of the controllable light source.

The processor 120 may be connected to the controllable light source 130. Optionally, the controllable light source 130 may be a lamp, and the lamp changes its irradiation direction under control of the processor 120. Optionally, the controllable light source 130 may also be a light source comprising a mechanical part and a lamp. The mechanical part may change its position under control of the processor 120, and thus drives the lamp to change its position. The mechanical part may be a mechanical arm, a circular guide rail, a magnetic suspension chassis or the like, which is not limited in this embodiment. In addition, Fig. 1 illustrates the system by using an example in which the controllable light source 130 is a lamp.

In conclusion, according to the plant growth control system provided by the embodiment of the present disclosure, growth information of a plant is acquired, a target irradiation position of a controllable light source in the plant is determined according to the growth information, and thus the controllable light source is controlled to irradiate the target irradiation position in the plant. This solves the problem in the related art that a user needs to rotate the flower pot where the plant grows at an interval of a predetermined time period; and achieves the effects of automatically controlling the controllable light source to irradiate a position desiring light irradiation in the plant, and simplifying user's operations.

In the above embodiment, the plant growth control system may collect relevant information by using a light intensity sensor or a camera and thus acquire growth information of a plant. The information collector 110 may comprise light intensity sensors or a camera. Therefore, plant growth control systems under such two circumstances where the information collector comprises light intensity sensors and where the information collector comprises a camera are described in different embodiments.

Fig. 2A is a schematic structural diagram illustrating a plant growth control system according to another example embodiment of the present disclosure. The system is described in this embodiment using an information collector equipped with at least two light intensity sensors as an example. As illustrated in Fig. 2A, the plant growth control system 200 may comprise: an information collector 210, a processor 220 connected to the information collector 210, and at least one controllable light source 230.

The information collector 210 is configured to acquire growth information of a plant, the growth information comprising at least one of branch and leaf distribution information of the plant and flower distribution information of the plant.

The processor 220 is configured to determine, according to the growth information, a target irradiation position of the controllable light source 230 in the plant, and to control the controllable light source 230 to irradiate the target irradiation position in the plant. The controllable light source 230 refers to a light source which may change its irradiation position in the plant. For example, the controllable light source is rotatable in terms of irradiation direction or movable in terms of position, or the plant is rotatable relative to the position of the controllable light source. The processor 220 may be connected to the controllable light source 230. Optionally, the controllable light source 230 may be a lamp, and the lamp changes its irradiation direction under control of the processor 220. Optionally, the controllable light source 230 may also be a light source comprising a mechanical part and a lamp. The mechanical part may change its position under control of the processor 220, and thus drives the lamp to change its position. The mechanical part may be a mechanical arm, a circular guide rail, a magnetic suspension chassis or the like, which is not limited in this embodiment.

Optionally, the processor 220 may determine the target irradiation position according to the following manners. When the growth information comprises the branch and leaf distribution information, if it is desired that the plant grows more uniformly, the processor 220 may determine a side of the plant where a sparse degree of the branch and leaf distribution is less than a first threshold as the target irradiation position (the growth on the side of the plant is promoted by giving more light irradiation to the side). If it is desired that the plant receives more uniform light irradiation, to enable a side of the plant where the branches and leaves are dense to receive light irradiation uniformly, the processor 220 may determine a side of the plant where a sparse degree of the branch and leaf distribution is greater than a second threshold as the target irradiation position. When the growth information comprises the flower distribution information, to enable the blooming flowers to receive sufficient light irradiation to ensure better blooming of the flowers, the processor 220 may determine a position of the plant where the flowers are blooming as the target irradiation position. If it is desired that a side of the plant where the flowers are still ready to bloom would immediately and more quickly bloom, the processor 220 may determine a position of the plant where the flowers are still ready to bloom as the target irradiation position. This embodiment is described only by using the scenario where the processor determines the target irradiation position according to the above manner as an example. Optionally, the processor 220 may also determine the target irradiation position according to another manner, which is not limited in this embodiment.

The information collector 210 may comprise at least two light intensity sensors, and each of the light intensity sensors may be configured to acquire a light intensity yielded after ambient light penetrates through the plant. The at least two light intensity sensors are generally arranged at the bottom of the plant. As such, when the ambient light penetrates through the plant and reaches the light intensity sensors arranged at the bottom of the plant, the light intensity sensors may respectively acquire the light intensities. To acquire distributions of the plant in various directions, the at least two light intensity sensors may be evenly arranged around the roots of the plant. In addition, each of the light intensity sensors may be always in a working state. Nevertheless, to prolong the service life of the light intensity sensors, the plant growth control system may further comprise switches for controlling the light intensity sensors. When the growth of the plant needs to be controlled, the switches are turned on and the light intensity sensors are set to the working state.

After each of the light intensity sensors acquires its corresponding light intensity, the processor 220 may correspondingly determine the growth information of the plant according to the light intensities acquired by the at least two light intensity sensors. Optionally, the sparser the growth of the plant is, the greater the light intensity yielded after the ambient light penetrates through the plant is; and the denser the growth of the plant is, the less the light intensity yielded after the ambient light penetrates through the plant is. Therefore, after the processor 220 obtains the light intensities, the processor 220 may determine the side corresponding to the light intensity sensor which collects a weak light intensity in the plant as a dense side, and determine the side corresponding to the light intensity sensor which collects a strong light intensity in the plant as a sparse side. The processor 220 may determine the branch and leaf distribution information of the plant. Optionally, the more the light intensity sensors are provided, the more accurate the determined distribution information of the plant is. Therefore, in practical implementation, the number of light intensity sensors may be defined according to actual needs, which is not limited in this embodiment.

Optionally, the plant growth control system may further comprise a flower pot, and at least two light intensity sensors may be arranged on the edge of the flower pot.

The at least two light intensity sensors may be evenly arranged on the edge of the flower pot. For example, using four light intensity sensors as an example, the flower pot is divided into four regions in the unit of 90 degrees, and the four light intensity sensors may be arranged in the flower pot at four positions A, B, C and D as illustrated in Fig. 2B. In addition, each of the light intensity sensors may be integrated sensors of the flower pot; or the flower pot and the light intensity sensors may be two independent parts, and before use, a user may install the light intensity sensors on the edge of the flower pot, which is not limited in this embodiment.

Optionally, in order to control the controllable light source 230 to irradiate the target irradiation position in the plant, the controllable light source 230 in the plant growth control system may be in a moving state or a stationary state under control of the processor 220. For example, after the processor 220 determines the target irradiation position, the processor 220 may control the controllable light source 230 to move, and thus cause the irradiation position of the controllable light source 230 to move to the target irradiation position in the plant.

Herein the movement may be movement made by the controllable light source 230 via rotating at an angle. For example, the controllable light source 230 may be a head-rotatable lamp (similar to a swing camera), the processor 220 may control rotation of the lamp head to thus control the lamp to move. Alternatively, the processor 220 may also control movement of the position of the controllable light source 230. For example, the controllable light source 230 may be a suspension lamp, and the suspension lamp may change its suspension position under control of the processor 220. However, this embodiment sets no limitation thereto.

In this embodiment, the controllable light source 230 may be a lamp or a lamp seat (the lamp seat is used for mounting the light bulb). The lamp may be a suspension lamp, a ceiling lamp, or a table lamp. The lamp may be in red, white, yellow, green or any other color. In addition, when the lamp is a suspension lamp, the plant growth control system may further comprise a suspension system (the suspension system may comprise a system located at the lower part of the suspension lamp, or a system located at the top part of the suspension lamp, or both the systems at the lower and top parts) corresponding to the suspension lamp, and the processor 220 may move the suspension lamp by moving the suspension system. In addition, the number of controllable light sources may be one, or may be two or more. When there are two or more controllable light sources, the processor 220 may selectively control one or a plurality of the controllable light sources to irradiate the target irradiation position in the plant. Optionally, the plurality of controllable light sources may be in the same color or different colors, which is not limited in this embodiment.

Optionally, when the processor 220 may control the controllable light source 230 to be in a moving state or a stationary state, the process that the processor 220 controls the controllable light source 230 to irradiate the target irradiation position in the plant may be implemented according to any one of the following two manners:
(1) The controllable light source in an ON state is controlled to rotate, and rotation of the controllable light source is stopped when the light intensity sensor corresponding to the target irradiation position acquires a light intensity greater than a predetermined light intensity.
   When the controllable light source 230 is a rotatable light source, the processor 220 may control the controllable light source 230 in the ON state to rotate (each of the light intensity sensors collects a light intensity in real time). When the light intensity acquired by the light intensity sensor corresponding to the target irradiation position is greater than a predetermined light intensity, the controllable light source 230 approximately moves to the target irradiation position. In this case, the processor 220 may control the controllable light source 230 to stop rotating.
   The light intensity sensor corresponding to the target irradiation position is the light intensity sensor based on which the target irradiation position is determined. For example, by using as an example a scenario where the processor 220 determines a side (that is the position corresponding to the light intensity sensor which acquires the greatest light intensity among all the light intensity sensors) of the plant where a sparse degree of the branch and leaf distribution is less than a first threshold as the target irradiation position, the light intensity sensor corresponding to the target irradiation position is the light intensity sensor which historically acquires the greatest light intensity.
(2) The controllable light source in an ON state is controlled to move, and movement of the controllable light source is stopped when the light intensity sensor corresponding to the target irradiation position acquires a light intensity greater than a predetermined light intensity.

When the controllable light source 230 is a movable light source, the processor 220 may control the controllable light source 230 in the ON state to move. When the light intensity acquired by the light intensity sensor corresponding to the target irradiation position is greater than a predetermined light intensity, the controllable light source 230 approximately moves to the target irradiation position. In this case, the processor 220 may control the controllable light source 230 to stop moving.

The light intensity sensor corresponding to the target irradiation position is the light intensity sensor based on which the target irradiation position is determined.

It should be noted that the above description is given only by using as an example the scenario where when the light intensity acquired by the light intensity sensor corresponding to the target irradiation position is greater than a predetermined light intensity, the processor stops movement of the controllable light source. Optionally, the processor may also stop movement of the controllable light source when the light intensity sensor corresponding to the target irradiation position acquires a light intensity greater than a historically acquired light intensity, which is not limited in this embodiment. In addition, if the initial state of the controllable light source 230 is an OFF state, the processor 220 needs to put in the ON state the controllable light source 230 before moving the same.

Optionally, the plant growth control system may further comprise a base for accommodating the flower pot, wherein the base may be electrically connected to the processor 220, and the base may be in a rotation state or a stationary state under control of the processor 220. When the base rotates, the flower pot disposed on the base may correspondingly rotate. For example, after the processor 220 determines the target irradiation position, the processor 220 may control the base to rotate to thus drive the flower pot to rotate. As such, the target irradiation position of the plant in the flower pot moves below the light source.

Optionally, when the base may be in a rotation state or a stationary state under control of the processor 220, the process that the processor 220 controls the controllable light source 230 to irradiate the target irradiation position in the plant may be implemented according to the following manners:
Controlling the flower pot where the plant grows to rotate, and stopping rotation of the flower pot when the light intensity sensor corresponding to the target irradiation position acquires a light intensity greater than a predetermined light intensity. The processor 220 may control the base to rotate (the rotation of the base may drive the flower pot thereon to rotate as well, that is, the plant in the flower pot may also rotate). When the light intensity acquired by the light intensity sensor corresponding to the target irradiation position is greater than a predetermined light intensity, the target irradiation position of the plant is substantially below the light source. In this case, the processor 220 may stop rotating the base (that is, stop rotating the flower pot).

This embodiment is described only by using the scenario where the controllable light source 230 stays in a moving state or a stationary state under control of the processor 220, or the base stays in a rotation state or a stationary state under control of the processor 220 as an example. Optionally, the controllable light source 230 and the base may both move or rotate under control of the processor 220, which is not limited in this embodiment.

It should be noted that, the plant growth control system in this embodiment may be a battery powered system or a system connected to a power socket for power supply. In addition, when the system is a system connected to a power socket for power supply, the system may further comprise a connection wire and a plug for connecting the socket. This embodiment sets no limitation thereto. In addition, when the light source is a suspension lamp, the suspension lamp may also be a wirelessly-chargeable lamp, which is not limited in this embodiment.

In conclusion, according to the plant growth control system provided by the embodiment of the present disclosure, growth information of a plant is acquired, a target irradiation position of a controllable light source in the plant is determined according to the growth information, and thus the controllable light source is controlled to irradiate the target irradiation position in the plant. This solves the problem in the related art that a user needs to rotate the flower pot where the plant grows at an interval of a predetermined time period; and achieves the effects of automatically controlling the controllable light source to irradiate a position desiring light irradiation in the plant, and simplifying user's operations.

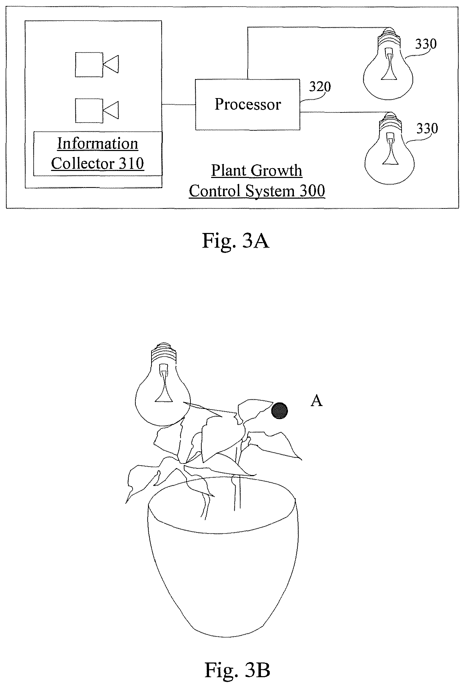

Fig. 3A is a schematic structural diagram illustrating a plant growth control system according to still another example embodiment of the present dislcosure. The system is described in this embodiment by using an information collector equipped with a camera as an example. As illustrated in Fig. 3A, the plant growth control system 300 may comprise: an information collector 310, a processor 320 connected to the information collector 310, and at least one controllable light source 330.

The information collector 310 is configured to acquire growth information of a plant, the growth information comprising at least one of branch and leaf distribution information of the plant and flower distribution information of the plant.

The processor 320 is configured to determine, according to the growth information, a target irradiation position of the controllable light source 330 in the plant, and to control the controllable light source to irradiate the target irradiation position in the plant. The controllable light source 330 is a light source which may change its irradiation position in the plant. For example, the controllable light source is rotatable in terms of irradiation direction or movable in terms of position. The relevant features of the controllable light source 330 are similar to those of the controllable light source described in the above embodiment, which are thus not described herein any further.

Optionally, the processor 320 may determine the target irradiation position according to the following manners. When the growth information comprises the branch and leaf distribution information, if it is desired that the plant grows more uniformly, the processor 320 may determine a side of the plant where a sparse degree of the branch and leaf distribution is less than a first threshold as the target irradiation position, and thus the growth on the side of the plant is promoted by giving more irradiation to the side. If it is desired that the plant receives more uniform light irradiation, to enable a side where the branches and leaves are dense to receive light irradiation uniformly, the processor 320 may determine a side of the plant where a sparse degree of the branch and leaf distribution is greater than a second threshold as the target irradiation position. When the growth information comprises the flower distribution information, to enable the blooming flowers to receive sufficient light irradiation to ensure better blooming of the flowers, the processor 320 may determine a position of the plant where the flowers are blooming as the target irradiation position. If it is desired that a side of the plant where the flowers are still ready to bloom would immediately and more quickly bloom, the processor 320 may determine the position of the plant where the flowers are still ready to bloom as the target irradiation position. This embodiment is described only by using the scenario where the processor determines the target irradiation position according to the above manner as an example. Optionally, the processor 320 may also determine the target irradiation position according to another manner, which is not limited in this embodiment.

The information collector 310 may comprise a camera. The camera is configured to acquire an image containing the plant. Optionally, the information collector may comprise one or a plurality of cameras. When there is only one camera, the position of the camera may be higher than the plant. As such, the camera may acquire a full-view image containing the plant. Nevertheless, the position of the camera may also be as high as the plant. In this case, the flower pot where the plant grows may be constantly rotated such that the camera acquires a plurality of frames of images containing the plant. In addition, when there are a plurality of cameras, the plurality of cameras may acquire images containing the plant from different angles and points of view.

After the camera acquires the image containing the plant, the processor 320 may acquire the growth information of the plant according to the image. Optionally, the processor 320 may conduct an image analysis on the acquired image, thus obtain the branch and leaf distribution, blooming flower distribution or both, and use the obtained analysis result as the growth information of the plant.

Optionally, to control the controllable light source 330 to irradiate the target irradiation position in the plant, the controllable light source 330 in the plant growth control system may be in a moving state or a stationary state under control of the processor 320.

When the processor 320 may control the controllable light source 330 to stay in a moving state or a stationary state, the process that the processor 320 controls the controllable light source 330 to irradiate the target irradiation position in the plant may be implemented according to the following manners:
First, positions of the controllable light source and the target irradiation position relative to each other are determined according to the image.
   Firstly, to acquire the position of the controllable light source 330, the image containing the plant acquired by the camera in this embodiment needs to cover the controllable light source 330. In this way, after acquiring the images, the processor 320 may analyze the image containing the plant and the controllable light source 330 to obtain positions of the controllable light source 330 and the target irradiation position in the plant relative to each other.
Second, an adjustment angle desired for the controllable light source is determined according to the relative positions.
   The plant growth control system may pre-store several candidate adjustment angles, for example, clockwise adjustment angles of 90 degrees, 180 degrees and 270 degrees. After determining the relative positions, the processor 320 selects an adjustment angle closest to the target angle from all the candidate adjustment angles. The target angle is a precise angle by which the current position of the light source is adjusted to the target irradiation position. By using a scenario where there is only one controllable light source 330, and where the camera acquires the image as illustrated in Fig.3B as an example, the processor 320 may determine that the controllable light source 330 needs to be clockwise adjusted by 90 degrees according to the relative positions of the controllable light source 330 and the target irradiation position (position A in the drawing).
   This embodiment is described by using a scenario where the processor 320 determines the adjustment angle by the above method as an example. Optionally, the processor 320 may also calculate, according to the relative positions, the angle by which the controllable light source 330 is adjusted to a central position of the target irradiation position, and determine the calculated angle as the adjustment angle, which is not limited in this embodiment.
Third, the controllable light source is adjusted according to the adjustment angle.

After determining the adjustment angle, the processor 320 may move the controllable light source 330 by the determined adjustment angle, for example, clockwise movement by 90 degrees.

Optionally, the plant growth control system may further comprise a base for accommodating the flower pot, wherein the base may be electrically connected to the processor 320, and the base may be in a rotation state or a stationary state under control of the processor 320. When the base rotates, the flower pot disposed on the base may correspondingly rotate.

Optionally, when the base may be in a rotation state or a stationary state under control of the processor 320, the process that the processor 320 controls the controllable light source 330 to irradiate the target irradiation position in the plant may be implemented according to the following manners:
First, positions of the controllable light source and the target irradiation position relative to each other are determined according to the image.
Second, an adjustment angle desired for the flower pot where the plant grows is determined according to the relative positions.
   This is similar to the manner of determining the adjustment angle desired by the controllable light source 330 described above, which is thus not described herein any further.
Third, the flower pot is adjusted according to the adjustment angle.

This is similar to the implementation in the above embodiment, which is thus not described herein any further.

This embodiment is described only by using the scenario where the controllable light source 330 stays in a moving state or a stationary state under control of the processor 320, or the base stays in a rotation state or a stationary state under control of the processor 320 as an example. Optionally, the controllable light source 330 and the base may both move or rotate under control of the processor 320, which is not limited in this embodiment.

It should be noted that, the plant growth control system in this embodiment may be a battery powered system or a system connected to a power socket for power supply. In addition, when the system is a system connected to a power socket for power supply, the system may further comprise a connection wire and a plug for connecting the socket. This embodiment sets no limitation thereto. In addition, when the light source is a suspension lamp, the suspension lamp may also be a wirelessly-chargeable lamp, which is not limited in this embodiment.

In conclusion, according to the plant growth control system provided by the embodiment of the present disclosure, growth information of a plant is acquired, a target irradiation position of a controllable light source in the plant is determined according to the growth information, and thus the controllable light source is controlled to irradiate the target irradiation position in the plant. This solves the problem in the related art that a user needs to rotate the flower pot where the plant grows at an interval of a predetermined time period; and achieves the effects of automatically controlling the controllable light source to irradiate a position desiring light irradiation in the plant, and simplifying user's operations.

It should be supplemented that in the above various embodiments, the plant growth control system may further comprise a human body infrared sensor, wherein the human body infrared sensor may be electrically connected to the processor. The human body infrared sensor is configured to detect a human body infrared signal in an environment.

Correspondingly, the processor is further configured to, when the human body infrared sensor detects a human body infrared signal, control the controllable light source in a predetermined control manner and/or control the flower pot where the plant grows to rotate, the predetermined control manner comprising adjusting luminance of the controllable light source or controlling the controllable light source to blink.

When someone approaches a plant, the human body infrared sensor in the plant growth control system may detect a human body infrared signal. At this time, the processor may increase the luminance of the light source, or control the light source to blink, or control the base of the flower pot to rotate, which brings a dazzling visual experience to a user, and greatly improves the user experience. In particular, when there are a plurality of controllable light sources, and the color of each light source is different from another, this will undoubtedly create a very dazzling visual experience to the user.

In an application scenario of this embodiment, the controllable light source is formed of a plurality of magnetic suspension lamps, the colors of the magnetic suspension lamps are different, and each magnetic suspension lamp may move under control of the processor. As such, when the human body infrared sensor detects a human body infrared signal, these magnetic suspension lamps may stay in a rotatary movement state under control of the processor. When the magnetic suspension lamps are rotating, a stunning visual feast is definitely brought to the user.

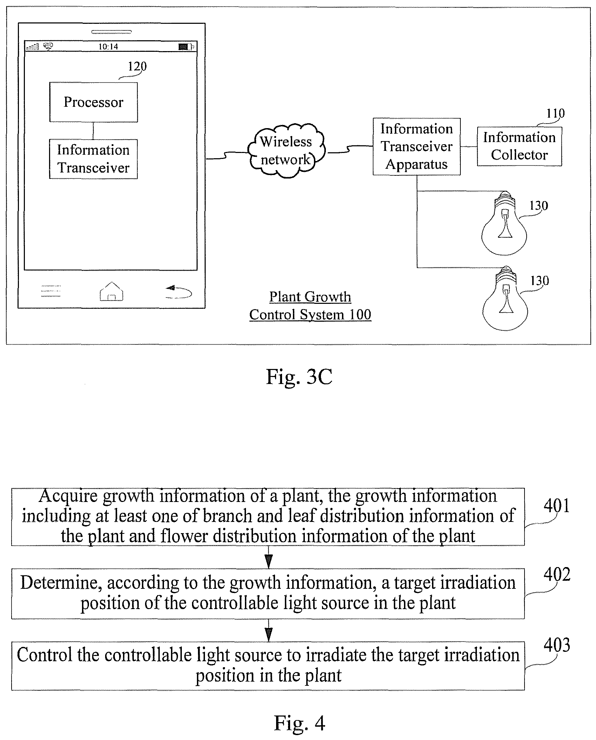

It should be supplemented that, referring to Fig. 3C, the processor 120 in the plant growth control system in the above embodiments may be a processor in a smart terminal. The processor 120 may receive a control instruction from a user, and perform a corresponding operation according to the received control instruction. The control instruction is used to control the controllable light source to move or control the flower pot to rotate. Optionally, when the control instruction is used to control the controllable light source to move, the processor 120 may establish a wireless connection with an information transceiver apparatus of the controllable light source via an information transceiver in the smart terminal, send the control instruction to the controllable light source 130 via the established wireless connection, and thus control the controllable light source 130. As such, a user may remotely control growth of the plant by using his or her smart terminal, thereby improving the user experience.

Optionally, when the processor is a processor in a smart terminal, the processor may also be wirelessly connected to the information collector by using an information transceiver in the smart terminal, receive the information collected by the information collector, and process the received information, which is not limited in this embodiment.

Fig. 4 is a flowchart illustrating a plant growth control method according to an example embodiment of the present disclosure. The plant growth control method may be performed by the plant growth control system as illustrated in Fig. 1. As illustrated in Fig. 4, the plant growth control method may comprise the following steps.

In step 401, growth information of a plant is acquired, wherein the growth information comprises at least one of branch and leaf distribution information of the plant and flower distribution information of the plant.

In step 402, a target irradiation position of the controllable light source in the plant is determined according to the growth information.

In step 403, the controllable light source is controlled to irradiate the target irradiation position in the plant.

In conclusion, according to the plant growth control method provided by the embodiment of the present disclosure, growth information of a plant is acquired, a target irradiation position of a controllable light source in the plant is determined according to the growth information, and thus the controllable light source is controlled to irradiate the target irradiation position in the plant. This solves the problem in the related art that a user needs to rotate the flower pot where the plant grows at an interval of a predetermined time period; and achieves the effects of automatically controlling the controllable light source to irradiate a position desiring light irradiation in the plant, and simplifying user's operations.

Since the plant growth control system may collect relevant information by using a light intensity sensor or a camera and thus acquire growth information of a plant, the plant growth control methods under such two circumstances where the information collector comprises light intensity sensors and comprises a camera are described in different embodiments.

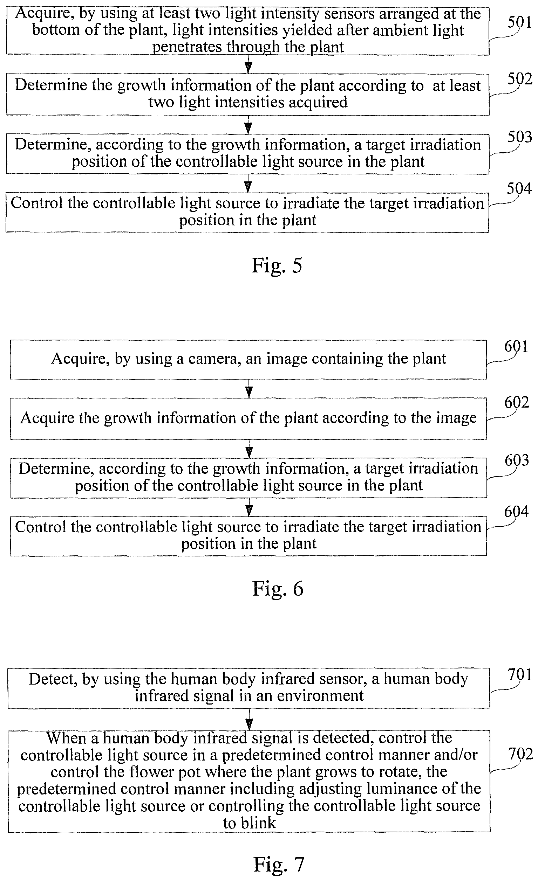

Fig. 5 is a flowchart illustrating a plant growth control method according to an example embodiment of the present disclosure. The plant growth control method may be performed by the plant growth control system as illustrated in Fig. 2A. As illustrated in Fig. 5, the plant growth control method may comprise the following steps.

In step 501, light intensities yielded after ambient light penetrates through the plant are respectively acquired by using at least two light intensity sensors arranged at the bottom of the plant.

In step 502, the growth information of the plant is determined according to at least two light intensities acquired.

The growth information comprises at least one of branch and leaf distribution information of the plant and flower distribution information of the plant.

In step 503, a target irradiation position of the controllable light source in the plant is determined according to the growth information.

Optionally, this step may comprise:
when the growth information comprises the branch and leaf distribution information, determining a side of the plant where a sparse degree of the branch and leaf distribution is less than a first threshold as the target irradiation position of the controllable light source, or determining a side of the plant where a sparse degree of the branch and leaf distribution is greater than a second threshold as the target irradiation position of the controllable light source; and
when the growth information comprises the flower distribution information, determining a side of the plant where flowers are blooming as the target irradiation position of the controllable light source.

In step 504, the controllable light source is controlled to irradiate the target irradiation position in the plant.

Optionally, this step may comprise the following three possible implementation manners:
First, the controllable light source in an ON state is controlled to rotate, and rotation of the controllable light source is stopped when the light intensity sensor corresponding to the target irradiation position acquires a light intensity greater than a predetermined light intensity.
Second, the controllable light source in an ON state is controlled to move, and movement of the controllable light source is stopped when the light intensity sensor corresponding to the target irradiation position acquires a light intensity greater than a predetermined light intensity.
Third, the flower pot where the plant grows is controlled to rotate, and rotation of the flower pot is stopped when the light intensity sensor corresponding to the target irradiation position acquires a light intensity greater than a predetermined light intensity.

In conclusion, according to the plant growth control method provided by the embodiment of the present disclosure, growth information of a plant is acquired, a target irradiation position of a controllable light source in the plant is determined according to the growth information, and thus the controllable light source is controlled to irradiate the target irradiation position in the plant. This solves the problem in the related art that a user needs to rotate the flower pot where the plant grows at an interval of a predetermined time period; and achieves the effects of automatically controlling the controllable light source to irradiate a position desiring light irradiation in the plant, and simplifying user's operations.

Fig. 6 is a flowchart illustrating a plant growth control method according to an example embodiment of the present dislosure. The plant growth control method may be performed by the plant growth control system as illustrated in Fig. 3A. As illustrated in Fig. 6, the plant growth control method may comprise the following steps.

In step 601, an image containing the plant is acquired by using a camera.

In step 602, the growth information of the plant is acquired according to the image.

The growth information comprises at least one of branch and leaf distribution information of the plant and flower distribution information of the plant.

In step 603, a target irradiation position of the controllable light source in the plant is determined according to the growth information.

When the growth information comprises the branch and leaf distribution information, a side of the plant where a sparse degree of the branch and leaf distribution is less than a first threshold is determined as the target irradiation position of the controllable light source, or a side of the plant where a sparse degree of the branch and leaf distribution is greater than a second threshold is determined as the target irradiation position of the controllable light source.

When the growth information comprises the flower distribution information, a side of the plant where flowers are blooming is determined as the target irradiation position of the controllable light source.

In step 604, the controllable light source is controlled to irradiate the target irradiation position in the plant.

Optionally, this step may comprise:
first, determining positions of the controllable light source and the target irradiation position relative to each other according to the image;
second, determining, according to the relative positions, an adjustment angle desired for the controllable light source or the flower pot where the plant grows; and
third, adjusting the controllable light source or the flower pot according to the adjustment angle.

In conclusion, according to the plant growth control method provided by the embodiment of the present disclosure, growth information of a plant is acquired, a target irradiation position of a controllable light source in the plant is determined according to the growth information, and thus the controllable light source is controlled to irradiate the target irradiation position in the plant. This solves the problem in the related art that a user needs to rotate the flower pot where the plant grows at an interval of a predetermined time period; and achieves the effects of automatically controlling the controllable light source to irradiate a position desiring light irradiation in the plant, and simplifying user's operations.

It should be noted that, referring to Fig. 7, in the above various embodiments, the plant growth control method may further comprise the following steps.

In step 701, a human body infrared signal in an environment is detected by using a human body infrared sensor.

In step 702, when a human body infrared signal is detected, the controllable light source is controlled in a predetermined control manner and/or the flower pot where the plant grows is controlled to rotate, wherein the predetermined control manner comprises adjusting luminance of the controllable light source or controlling the controllable light source to blink.

When someone approaches a plant, the human body infrared sensor in the plant growth control system may detect a human body infrared signal. At this time, the processor may increase the luminance of the controllable light source, or control the controllable light source to blink, or control the base of the flower pot to rotate, which brings a dazzling visual experience to a user, and greatly improves the user experience. In particular, when there are a plurality of light sources, and the color of each light source is different from another, this will undoubtedly create a very dazzling visual experience to the user.

It should be supplemented that, the processor in the plant growth control system may be a processor in a smart terminal. The processor may receive a control instruction from a user, and perform a corresponding operation according to the received control instruction. The control instruction is used to control the light source to move or control the flower pot to rotate. As such, a user may remotely control growth of the plant by using his or her smart terminal, thereby improving the user experience.

It will be appreciated that the present disclosure is not limited to the exact construction that has been described above and illustrated in the accompanying drawings, and that various modifications and changes can be made without departing from the scope thereof. The scope of the present invention is only defined by the appended claims.

## Claims

1. A plant growth control system (100, 200, 300), comprising: an information collector (110, 210, 310), a processor (120, 220, 320) connected to the information collector (110, 210, 310), and a controllable light source (130, 230, 330); wherein
the information collector (110, 210, 310) is configured to acquire growth information of a plant, the growth information comprising at least one of branch and leaf distribution information of the plant and flower distribution information of the plant; and
the processor (120, 220, 320) is configured to determine, according to the growth information, a target irradiation position of the controllable light source (130, 230, 330) in the plant, and to control the controllable light source (130, 230, 330) to irradiate the target irradiation position in the plant,
wherein the information collector (210) comprises at least two light intensity sensors; wherein
the light intensity sensors are configured to acquire light intensities yielded after ambient light penetrates through the plant; and
the processor (220) is further configured to determine the growth information of the plant according to the light intensities acquired by the at least two light intensity sensors,
wherein the processor is configured to:
control the controllable light source in an ON state to rotate, and stop rotation of the controllable light source when the light intensity sensor corresponding to the target irradiation position acquires a light intensity greater than a predetermined light intensity;
or
control the controllable light source in an ON state to move, and stop movement of the controllable light source when the light intensity sensor corresponding to the target irradiation position acquires a light intensity greater than a predetermined light intensity;
or
control a flower pot where the plant grows to rotate, and stop rotation of the flower pot when the light intensity sensor corresponding to the target irradiation position acquires a light intensity greater than a predetermined light intensity, the plant growth control system further comprising a base for accommodating the flower pot, wherein the base may be electrically connected to the processor (220), and wherein the base may be in a rotation state or a stationary state under control of the processor (220).

2. The system according to claim 1, wherein the system (200) further comprises a flower pot, wherein the at least two light intensity sensors are arranged on the edge of the flower pot.

3. A plant growth control system (100, 200, 300), comprising: an information collector (110, 210, 310), a processor (120, 220, 320) connected to the information collector (110, 210, 310), and a controllable light source (130, 230, 330); wherein
the information collector (110, 210, 310) is configured to acquire growth information of a plant, the growth information comprising at least one of branch and leaf distribution information of the plant and flower distribution information of the plant; and
the processor (120, 220, 320) is configured to determine, according to the growth information, a target irradiation position of the controllable light source (130, 230, 330) in the plant, and to control the controllable light source (130, 230, 330) to irradiate the target irradiation position in the plant,
wherein the information collector (310) comprises a camera; wherein
the camera is configured to acquire an image containing the plant; and
the processor (320) is further configured to acquire the growth information of the plant according to the image,
wherein the image further contains the controllable light source, and the processor is configured to:
determine positions of the controllable light source and the target irradiation position relative to each other according to the image;
determine, according to the relative positions, an adjustment angle desired for the controllable light source or the flower pot where the plant grows; and
adjust the controllable light source or the flower pot according to the adjustment angle.

4. The system according to any one of claims 1 to 3, wherein the system (100, 200, 300) further comprises a human body infrared sensor; wherein
the human body infrared sensor is configured to detect a human body infrared signal in an environment; and
the processor (120, 220, 320) is further configured to, when the human body infrared sensor detects the human body infrared signal, control the controllable light source (130, 230, 330) in a predetermined control manner and/or control the flower pot where the plant grows to rotate, the predetermined control manner comprising adjusting luminance of the controllable light source (130, 230, 330) or controlling the controllable light source (130, 230, 330) to blink.

5. The system according to any one of claims 1 to 4, wherein when the growth information comprises the branch and leaf distribution information, the processor (120, 220, 320) is configured to determine:
a side of the plant where a sparse degree of the branch and leaf distribution is less than a first threshold as the target irradiation position of the controllable light source, or
a side of the plant where a sparse degree of the branch and leaf distribution is greater than a second threshold as the target irradiation position of the controllable light source;
wherein when the growth information comprises the flower distribution information, the processor (120, 220, 320) is configured to determine a side of the plant where flowers are blooming as the target irradiation position of the controllable light source.

6. A plant growth control method, wherein the method is performed by the plant growth control system (100, 200, 300) according to any one of claims 1 to 2, 4, 5, wherein the method comprises:
acquiring (401, 502, 602) growth information of a plant, the growth information comprising at least one of branch and leaf distribution information of the plant and flower distribution information of the plant;
determining (402, 503, 603), according to the growth information, a target irradiation position of the controllable light source in the plant; and
controlling (403, 504, 604) the controllable light source to irradiate the target irradiation position in the plant,
wherein the step of acquiring growth information of a plant comprises:
acquiring (501), by using at least two light intensity sensors arranged at the bottom of the plant, light intensities yielded after ambient light penetrates through the plant; and
determining (502) the growth information of the plant according to at least two light intensities acquired,
wherein the step of controlling (504, 604) the controllable light source to irradiate the target irradiation position in the plant comprises:
controlling the controllable light source in an ON state to rotate, and stopping rotation of the controllable light source when the light intensity sensor corresponding to the target irradiation position acquires a light intensity greater than a predetermined light intensity;
or
controlling the controllable light source in an ON state to move, and stopping movement of the controllable light source when the light intensity sensor corresponding to the target irradiation position acquires a light intensity greater than a predetermined light intensity;
or
controlling the flower pot where the plant grows to rotate, and stopping rotation of the flower pot when the light intensity sensor corresponding to the target irradiation position acquires a light intensity greater than a predetermined light intensity.

7. A plant growth control method, wherein the method is performed by the plant growth control system (100, 200, 300) according to any one of claims 3 to 5, wherein the method comprises:
acquiring (401, 502, 602) growth information of a plant, the growth information comprising at least one of branch and leaf distribution information of the plant and flower distribution information of the plant;
determining (402, 503, 603), according to the growth information, a target irradiation position of the controllable light source in the plant; and
controlling (403, 504, 604) the controllable light source to irradiate the target irradiation position in the plant,
wherein the step of acquiring growth information of a plant comprises:
acquiring (601), by using a camera, an image containing the plant; and
acquiring (602) the growth information of the plant according to the image,
wherein the image further contains the controllable light source, and the step of controlling (604) the controllable light source to irradiate the target irradiation position in the plant comprises:
determining positions of the controllable light source and the target irradiation position relative to each other according to the image;
determining, according to the relative positions, an adjustment angle desired for the controllable light source or the flower pot where the plant grows; and
adjusting the controllable light source or the flower pot according to the adjustment angle.

8. The method according to claim 6 or 7, wherein the step of determining (503, 603), according to the growth information, a target irradiation position of the controllable light source in the plant comprises:
when the growth information comprises the branch and leaf distribution information:
determining a side of the plant where a sparse degree of the branch and leaf distribution is less than a first threshold as the target irradiation position of the controllable light source, or
determining a side of the plant where a sparse degree of the branch and leaf distribution is greater than a second threshold as the target irradiation
position of the controllable light source;
when the growth information comprises the flower distribution information, determining a side of the plant where flowers are blooming as the target irradiation position of the controllable light source.

9. The method according to any one of claims 6 to 8, wherein the method further comprises:
detecting (701), by using a human body infrared sensor, a human body infrared signal in an environment; and
when the human body infrared signal is detected, controlling (702) the controllable light source in a predetermined control manner and/or controlling the flower pot where the plant grows to rotate, the predetermined control manner comprising adjusting luminance of the controllable light source or controlling the controllable light source to blink.

10. A computer program, including instructions for executing the steps of a plant growth control method according to any one of claims 6 to 9 when said program is executed by a computer.

11. A recording medium readable by a computer and having recorded thereon a computer program including instructions for executing the steps of a plant growth control method according to any one of claims 6 to 9.

## Patentansprüche

1. System zur Steuerung eines Pflanzenwachstums (100, 200, 300), umfassend:
einen Informationssammler (110, 210, 310), einen mit dem Informationssammler (110, 210, 310) verbundenen Prozessor (120, 220, 320) und eine steuerbare Lichtquelle (130, 230, 330), wobei
der Informationssammler (110, 210, 310) dazu ausgestaltet ist, Wachstumsinformationen einer Pflanze zu erfassen, wobei die Wachstumsinformationen mindestens eine von Zweig- und Blattverteilungsinformationen der Pflanze und Blütenverteilungsinformationen der Pflanze umfassen, und
der Prozessor (120, 220, 320) dazu ausgestaltet ist, eine Zielbestrahlungsposition der steuerbaren Lichtquelle (130, 230, 330) in der Pflanze entsprechend den Wachstumsinformationen zu bestimmen und die steuerbare Lichtquelle (130, 230, 330) zu steuern, um die Zielbestrahlungsposition in der Pflanze zu bestrahlen,
wobei der Informationssammler (210) mindestens zwei Lichtintensitätssensoren umfasst, wobei
die Lichtintensitätssensoren dazu ausgestaltet sind, Lichtintensitäten zu erfassen, die erhalten werden, nachdem Umgebungslicht die Pflanze durchdrungen hat, und
der Prozessor (220) ferner dazu ausgestaltet ist, die Wachstumsinformationen der Pflanze entsprechend den Lichtintensitäten zu bestimmen, die von den mindestens zwei Lichtintensitätssensoren erfasst werden,
wobei der Prozessor dazu ausgestaltet ist:
die steuerbare Lichtquelle in einem EIN-Zustand zum Drehen zu steuern, und eine Drehung der steuerbaren Lichtquelle zu stoppen, wenn der Lichtintensitätssensor, der der Zielbestrahlungsposition entspricht, eine Lichtintensität erfasst, die größer als eine vorbestimmte Lichtintensität ist,
oder
die steuerbare Lichtquelle in einem EIN-Zustand zum Bewegen zu steuern, und eine Bewegung der steuerbaren Lichtquelle zu stoppen, wenn der Lichtintensitätssensor, der der Zielbestrahlungsposition entspricht, eine Lichtintensität erfasst, die größer als eine vorbestimmte Lichtintensität ist,
oder
einen Blumentopf, in dem die Pflanze wächst, zum Drehen zu steuern, und eine Drehung des Blumentopfes zu stoppen, wenn der Lichtintensitätssensor, der der Zielbestrahlungsposition entspricht, eine Lichtintensität erfasst, die größer als eine vorbestimmte Lichtintensität ist, wobei das System zur Steuerung eines Pflanzenwachstums ferner ein Fußteil zum Aufnehmen des Blumentopfes umfasst, wobei das Fußteil elektrisch mit dem Prozessor (220) verbunden sein kann, und wobei das Fußteil sich unter Steuerung des Prozessors (220) in einem Drehungszustand oder einem stationären Zustand befinden kann.

2. System nach Anspruch 1, wobei das System (200) ferner einen Blumentopf umfasst, wobei die mindestens zwei Lichtintensitätssensoren am Rand des Blumentopfes angeordnet sind.

3. System zur Steuerung eines Pflanzenwachstums (100, 200, 300), umfassend: einen Informationssammler (110, 210, 310), einen mit dem Informationssammler (110, 210, 310) verbundenen Prozessor (120, 220, 320) und eine steuerbare Lichtquelle (130, 230, 330), wobei
der Informationssammler (110, 210, 310) dazu ausgestaltet ist, Wachstumsinformationen einer Pflanze zu erfassen, wobei die Wachstumsinformationen mindestens eine von Zweig- und Blattverteilungsinformationen der Pflanze und Blütenverteilungsinformationen der Pflanze umfassen, und
der Prozessor (120, 220, 320) dazu ausgestaltet ist, eine Zielbestrahlungsposition der steuerbaren Lichtquelle (130, 230, 330) in der Pflanze entsprechend den Wachstumsinformationen zu bestimmen und die steuerbare Lichtquelle (130, 230, 330) zu steuern, um die Zielbestrahlungsposition in der Pflanze zu bestrahlen,
wobei der Informationssammler (310) eine Kamera umfasst, wobei
die Kamera dazu ausgestaltet ist, ein die Pflanze enthaltendes Bild zu erfassen, und
der Prozessor (320) ferner dazu ausgestaltet ist, die Wachstumsinformationen der Pflanze entsprechend dem Bild zu erfassen,
wobei das Bild ferner die steuerbare Lichtquelle enthält und der Prozessor dazu ausgestaltet ist:
entsprechend dem Bild Positionen der steuerbaren Lichtquelle und der Zielbestrahlungsposition relativ zueinander zu bestimmen,
entsprechend den relativen Positionen einen Einstellwinkel zu bestimmen, der für die steuerbare Lichtquelle oder den Blumentopf, in dem die Pflanze wächst, erwünscht ist, und
die steuerbare Lichtquelle oder den Blumentopf entsprechend dem Einstellwinkel einzustellen.

4. System nach einem der Ansprüche 1 bis 3, wobei das System (100, 200, 300) ferner einen Infrarotsensor für einen menschlichen Körper umfasst, wobei
der Infrarotsensor für einen menschlichen Körper dazu ausgestaltet ist, ein Infrarotsignal eines menschlichen Körpers in einer Umgebung festzustellen, und
der Prozessor (120, 220, 320) ferner dazu ausgestaltet ist, die steuerbare Lichtquelle (130, 230, 330) auf eine vorbestimmte Steuerungsweise zu steuern und/oder den Blumentopf, in dem die Pflanze wächst, zum Drehen zu steuern, wenn der Infrarotsensor für einen menschlichen Körper das Infrarotsignal eines menschlichen Körpers feststellt, wobei die vorbestimmte Steuerungsweise ein Einstellen der Leuchtkraft der steuerbaren Lichtquelle (130, 230, 330) oder ein Steuern der steuerbaren Lichtquelle (130, 230, 330) zum Blinken umfasst.

5. System nach einem der Ansprüche 1 bis 4, wobei, wenn die Wachstumsinformationen die Zweig- und Blattverteilungsinformationen umfassen, der Prozessor (120, 220, 320) dazu ausgestaltet ist:
eine Seite der Pflanze, auf der ein geringer Grad der Zweig- und Blattverteilung kleiner als ein erster Schwellenwert ist, als die Zielbestrahlungsposition der steuerbaren Lichtquelle zu bestimmen, oder
eine Seite der Pflanze, auf der ein geringer Grad der Zweig- und Blattverteilung größer als ein zweiter Schwellenwert ist, als die Zielbestrahlungsposition der steuerbaren Lichtquelle zu bestimmen,
wobei, wenn die Wachstumsinformationen die Blütenverteilungsinformationen umfassen, der Prozessor (120, 220, 320) dazu ausgestaltet ist, eine Seite der Pflanze, wo Blüten blühen, als die Zielbestrahlungsposition der steuerbaren Lichtquelle zu bestimmen.

6. Verfahren zur Steuerung eines Pflanzenwachstums, wobei das Verfahren durch das System zur Steuerung eines Pflanzenwachstums (100, 200, 300) nach einem der Ansprüche 1 bis 2, 4, 5 durchgeführt wird, wobei das Verfahren umfasst:
Erfassen (401, 502, 602) von Wachstumsinformationen einer Pflanze, wobei die Wachstumsinformationen mindestens eine von Zweig- und Blattverteilungsinformationen der Pflanze und Blütenverteilungsinformationen der Pflanze umfassen,
Bestimmen (402, 503, 603) einer Zielbestrahlungsposition der steuerbaren Lichtquelle in der Pflanze entsprechend den Wachstumsinformationen, und
Steuern (403, 504, 604) der steuerbaren Lichtquelle zum Bestrahlen der Zielbestrahlungsposition in der Pflanze,
wobei der Schritt des Erfassens von Wachstumsinformationen einer Pflanze umfasst:
Erfassen (501) von Lichtintensitäten, die erhalten werden, nachdem Umgebungslicht die Pflanze durchdrungen hat, unter Verwendung von mindestens zwei Lichtintensitätssensoren, die am Boden der Pflanze angeordnet sind, und
Bestimmen (502) der Wachstumsinformationen der Pflanze entsprechend mindestens zweier erfasster Lichtintensitäten,
wobei der Schritt des Steuerns (504, 604) der steuerbaren Lichtquelle zum Bestrahlen der Zielbestrahlungsposition in der Pflanze umfasst:
Steuern der steuerbare Lichtquelle in einem EIN-Zustand zum Drehen, und Stoppen einer Drehung der steuerbaren Lichtquelle, wenn der Lichtintensitätssensor, der der Zielbestrahlungsposition entspricht, eine Lichtintensität erfasst, die größer als eine vorbestimmte Lichtintensität ist,
oder
Steuern der steuerbaren Lichtquelle in einem EIN-Zustand zum Bewegen, und Stoppen einer Bewegung der steuerbaren Lichtquelle, wenn der Lichtintensitätssensor, der der Zielbestrahlungsposition entspricht, eine Lichtintensität erfasst, die größer als eine vorbestimmte Lichtintensität ist,
oder
Steuern des Blumentopfes, in dem die Pflanze wächst, zum Drehen, und Stoppen einer Drehung des Blumentopfes, wenn der Lichtintensitätssensor, der der Zielbestrahlungsposition entspricht, eine Lichtintensität erfasst, die größer als eine vorbestimmte Lichtintensität ist.

7. Verfahren zur Steuerung eines Pflanzenwachstums, wobei das Verfahren durch das System zur Steuerung eines Pflanzenwachstums (100, 200, 300) nach einem der Ansprüche 3 bis 5 durchgeführt wird, wobei das Verfahren umfasst:
Erfassen (401, 502, 602) von Wachstumsinformationen einer Pflanze, wobei die Wachstumsinformationen mindestens eine von Zweig- und Blattverteilungsinformationen der Pflanze und Blütenverteilungsinformationen der Pflanze umfassen,
Bestimmen (402, 503, 603) einer Zielbestrahlungsposition der steuerbaren Lichtquelle in der Pflanze entsprechend den Wachstumsinformationen, und
Steuern (403, 504, 604) der steuerbaren Lichtquelle zum Bestrahlen der Zielbestrahlungsposition in der Pflanze,
wobei der Schritt des Erfassens von Wachstumsinformationen einer Pflanze umfasst:
Erfassen (601) eines die Pflanze enthaltenden Bildes unter Verwendung einer Kamera, und
Erfassen (602) der Wachstumsinformationen der Pflanze entsprechend dem Bild,
wobei das Bild ferner die steuerbare Lichtquelle enthält, und der Schritt des Steuerns (604) der steuerbaren Lichtquelle zum Bestrahlen der Zielbestrahlungsposition in der Pflanze umfasst:
Bestimmen von Positionen der steuerbaren Lichtquelle und der Zielbestrahlungsposition relativ zueinander entsprechend dem Bild,
Bestimmen eines Einstellwinkels entsprechend den relativen Positionen, der für die steuerbare Lichtquelle oder den Blumentopf, in dem die Pflanze wächst, erwünscht ist, und
Einstellen der steuerbaren Lichtquelle oder des Blumentopfes entsprechend dem Einstellwinkel.

8. Verfahren nach Anspruch 6 oder 7, wobei der Schritt des Bestimmens (503, 603) einer Zielbestrahlungsposition der steuerbaren Lichtquelle in der Pflanze entsprechend den Wachstumsinformationen umfasst:
wenn die Wachstumsinformationen die Zweig- und Blattverteilungsinformationen umfassen:
Bestimmen einer Seite der Pflanze, auf der ein geringer Grad der Zweig- und Blattverteilung kleiner als ein erster Schwellenwert ist, als die Zielbestrahlungsposition der steuerbaren Lichtquelle, oder
Bestimmen einer Seite der Pflanze, auf der ein geringer Grad der Zweig- und Blattverteilung größer als ein zweiter Schwellenwert ist, als die Zielbestrahlungsposition der steuerbaren Lichtquelle,
wenn die Wachstumsinformationen die Blütenverteilungsinformationen umfassen, Bestimmen einer Seite der Pflanze, wo Blüten blühen, als die Zielbestrahlungsposition der steuerbaren Lichtquelle.

9. Verfahren nach einem der Ansprüche 6 bis 8, wobei das Verfahren ferner umfasst:
Feststellen (701) eines Infrarotsignals eines menschlichen Körpers in einer Umgebung unter Verwendung des Infrarotsensors für einen menschlichen Körper, und
Steuern (702) der steuerbaren Lichtquelle auf eine vorbestimmte Steuerungsweise und/oder Steuern des Blumentopfes, in dem die Pflanze wächst, zum Drehen, wenn das Infrarotsignal eines menschlichen Körpers festgestellt wird, wobei die vorbestimmte Steuerungsweise ein Einstellen der Leuchtkraft der steuerbaren Lichtquelle oder ein Steuern der steuerbaren Lichtquelle zum Blinken umfasst.

10. Computerprogramm, das Anweisungen zum Ausführen der Schritte eines Verfahrens zur Steuerung eines Pflanzenwachstums nach einem der Ansprüche 6 bis 9 beinhaltet, wenn das Programm von einem Computer ausgeführt wird.

11. Aufzeichnungsmedium, das von einem Computer gelesen werden kann und auf dem ein Computerprogramm, das Anweisungen zum Ausführen der Schritte eines Verfahrens zur Steuerung eines Pflanzenwachstums nach einem der Ansprüche 6 bis 9 beinhaltet, aufgezeichnet ist.

## Revendications

1. Système de contrôle de croissance de plante (100, 200, 300), comprenant : un collecteur d'informations (110, 210, 310), un processeur (120, 220, 320) relié au collecteur d'informations (110, 210, 310), et une source lumineuse contrôlable (130, 230, 330) ; dans lequel
le collecteur d'informations (110, 210, 310) est configuré pour acquérir des informations de croissance d'une plante, les informations de croissance comprenant au moins l'une parmi des informations sur la répartition des branches et des feuilles de la plante et des informations sur la répartition des fleurs de la plante ; et
le processeur (120, 220, 320) est configuré pour déterminer, selon les informations de croissance, une position d'irradiation cible de la source lumineuse contrôlable (130, 230, 330) dans la plante, et pour contrôler la source lumineuse contrôlable (130, 230, 330) pour irradier la position d'irradiation cible dans la plante,
dans lequel le collecteur d'informations (210) comprend au moins deux capteurs d'intensité lumineuse ; dans lequel
les capteurs d'intensité lumineuse sont configurés pour acquérir les intensités lumineuses produites après la pénétration de la lumière ambiante à travers la plante ; et
le processeur (220) est configuré en outre pour déterminer les informations de croissance de la plante selon les intensités lumineuses acquises par les au moins deux capteurs d'intensité lumineuse,
dans lequel le processeur est configuré pour :
contrôler en rotation la source lumineuse contrôlable dans un état MARCHE, et cesser la rotation de la source lumineuse contrôlable lorsque le capteur d'intensité lumineuse correspondant à la position d'irradiation cible acquière une intensité lumineuse supérieure à une intensité lumineuse prédéterminée ;
ou
contrôler en déplacement la source lumineuse contrôlable dans un état MARCHE, et cesser le déplacement de la source lumineuse contrôlable lorsque le capteur d'intensité lumineuse correspondant à la position d'irradiation cible acquière une intensité lumineuse supérieure à une intensité lumineuse prédéterminée ;
ou
contrôler en rotation un pot de fleur où pousse la plante, et cesser la rotation du pot de fleur lorsque le capteur d'intensité lumineuse correspondant à la position d'irradiation cible acquière une intensité lumineuse supérieure à une intensité lumineuse prédéterminée, le système de contrôle de croissance de plante comprenant en outre une base pour loger le pot de fleur, dans lequel la base peut être reliée électriquement au processeur (220), et dans lequel la base peut être dans un état de rotation ou dans un état fixe sous le contrôle du processeur (220).

2. Système selon la revendication 1, dans lequel le système (200) comprend en outre un pot de fleur, dans lequel les au moins deux capteurs d'intensité lumineuse sont agencés au bord du pot de fleur.

3. Système de contrôle de croissance de plante (100, 200, 300), comprenant : un collecteur d'informations (110, 210, 310), un processeur (120, 220, 320) relié au collecteur d'informations (110, 210, 310), et une source lumineuse contrôlable (130, 230, 330) ; dans lequel
le collecteur d'informations (110, 210, 310) est configuré pour acquérir des informations de croissance d'une plante, les informations de croissance comprenant au moins une parmi des informations sur la répartition des branches et des feuilles de la plante et des informations sur la répartition des fleurs de la plante ; et
le processeur (120, 220, 320) est configuré pour déterminer, selon les informations de croissance, une position d'irradiation cible de la source lumineuse contrôlable (130, 230, 330) dans la plante, et pour contrôler la source lumineuse contrôlable (130, 230, 330) pour irradier la position d'irradiation cible dans la plante,
dans lequel le collecteur d'informations (310) comprend une caméra ; dans lequel
la caméra est configurée pour acquérir une image contenant la plante ; et
le processeur (320) est configuré en outre pour acquérir les informations de croissance de la plante selon l'image,
dans lequel l'image contient en outre la source lumineuse contrôlable, et le processeur est configuré pour :
déterminer des positions de la source lumineuse contrôlable et la position d'irradiation cible relativement les unes aux autres selon l'image ;
déterminer, selon les positions relatives, un angle de réglage souhaité pour la source lumineuse contrôlable ou pour le pot de fleur où pousse la plante ; et
régler la source lumineuse contrôlable ou le pot de fleur selon l'angle de réglage.

4. Système selon l'une quelconque des revendications 1 à 3, dans lequel le système (100, 200, 300) comprend en outre un capteur infrarouge de corps humain ; dans lequel
le capteur infrarouge de corps humain est configuré pour détecter un signal infrarouge de corps humain dans un environnement ; et
le processeur (120, 220, 320) est configuré en outre, lorsque le capteur infrarouge de corps humain détecte le signal infrarouge de corps humain, pour contrôler la source lumineuse contrôlable (130, 230, 330) selon une manière de contrôle prédéterminée et/ou pour contrôler en rotation le pot de fleur où pousse la plante, la manière de contrôle prédéterminée comprenant un réglage de la luminance de la source lumineuse contrôlable (130, 230, 330) ou un contrôle de la source lumineuse contrôlable (130, 230, 330) pour qu'elle clignote.

5. Système selon l'une quelconque des revendications 1 à 4, dans lequel lorsque les informations de croissance comprennent les informations sur la répartition des branches et des feuilles, le processeur (120, 220, 320) est configuré pour déterminer :
un côté de la plante où un degré clairsemé de répartition des branches et des feuilles est inférieur à un premier seuil en tant que position d'irradiation cible de la source lumineuse contrôlable, ou
un côté de la plante où un degré clairsemé de répartition des branches et des feuilles est supérieur à un second seuil en tant que position d'irradiation cible de la source lumineuse contrôlable ;
dans lequel lorsque les informations de croissance comprennent les informations sur la répartition des fleurs, le processeur (120, 220, 320) est configuré pour déterminer un côté de la plante où des fleurs fleurissent en tant que position d'irradiation cible de la source lumineuse contrôlable.

6. Procédé de contrôle de croissance de plante, dans lequel le procédé est effectué par le système de contrôle de croissance de plante (100, 200, 300) selon l'une quelconque des revendications 1 à 2, 4, 5, dans lequel le procédé comprend:
une acquisition (401, 502, 602) des informations de croissance d'une plante, les informations de croissance comprenant au moins une parmi des informations sur la répartition des branches et des feuilles de la plante et des informations sur la répartition des fleurs de la plante ;
une détermination (402, 503, 603), selon les informations de croissance, d'une position d'irradiation cible de la source lumineuse contrôlable dans la plante ; et
un contrôle (403, 504, 604) de la source lumineuse contrôlable pour irradier la position d'irradiation cible dans la plante,
dans lequel l'étape d'acquisition d'informations de croissance d'une plante comprend :
une acquisition (501), en utilisant au moins deux capteurs d'intensité lumineuse agencés en bas de la plante, d'intensités lumineuses produites après la pénétration de la lumière ambiante à travers la plante ; et
une détermination (502) des informations de croissance de la plante selon au moins deux intensités lumineuses acquises,
dans lequel l'étape de contrôle (504, 604) de la source lumineuse contrôlable pour irradier la position d'irradiation cible dans la plante comprend :
un contrôle en rotation de la source lumineuse contrôlable dans un état MARCHE, et une cessation de la rotation de la source lumineuse contrôlable lorsque le capteur d'intensité lumineuse correspondant à la position d'irradiation cible acquière une intensité lumineuse supérieure à une intensité lumineuse prédéterminée ;
ou
un contrôle en déplacement de la source lumineuse contrôlable dans un état MARCHE, et une cessation du déplacement de la source lumineuse contrôlable lorsque le capteur d'intensité lumineuse correspondant à la position d'irradiation cible acquière une intensité lumineuse supérieure à une intensité lumineuse prédéterminée ;
ou
un contrôle en rotation du pot de fleur où pousse la plante, et une cessation de la rotation du pot de fleur lorsque le capteur d'intensité lumineuse correspondant à la position d'irradiation cible acquière une intensité lumineuse supérieure à une intensité lumineuse prédéterminée.

7. Procédé de contrôle de croissance de plante, dans lequel le procédé est mis en oeuvre par le système de contrôle de croissance de plante (100, 200, 300) selon l'une quelconque des revendications 3 à 5, dans lequel le procédé comprend :
une acquisition ( 401, 502, 602) des informations de croissance d'une plante, les informations de croissance comprenant au moins une parmi des informations sur la répartition des branches et des feuilles de la plante et des informations sur la répartition des fleurs de la plante ;
une détermination (402, 503, 603), selon les informations de croissance, d'une position d'irradiation cible de la source lumineuse contrôlable dans la plante ; et
un contrôle (403, 504, 604) de la source lumineuse contrôlable pour qu'elle irradie la position d'irradiation cible dans la plante,
dans lequel l'étape d'acquisition des informations de croissance d'une plante comprend :
une acquisition (601), en utilisant une caméra, d'une image contenant la plante ; et
une acquisition (602) des informations de croissance de la plante selon l'image,
dans lequel l'image contient en outre la source lumineuse contrôlable, et l'étape de contrôle (604) de la source lumineuse contrôlable pour qu'elle irradie la position d'irradiation cible dans la plante comprend :
une détermination de positions de la source lumineuse contrôlable et de la position d'irradiation cible relativement les unes autres selon l'image ;
une détermination, selon les positions relatives, d'un angle de réglage souhaité pour la source lumineuse contrôlable ou pour le pot de fleur où pousse la plante ; et
un réglage de la source lumineuse contrôlable ou du pot de fleur selon l'angle de réglage.

8. Procédé selon la revendication 6 ou 7, dans lequel l'étape de détermination (503, 603), selon les informations de croissance, d'une position d'irradiation cible de la source lumineuse contrôlable dans la plante comprend :
lorsque les informations de croissance comprennent les informations sur la répartition des branches et des feuilles :
une détermination d'un côté de la plante où un degré clairsemé de répartition des branches et des feuilles est inférieur à un premier seuil en tant que position d'irradiation cible de la source lumineuse contrôlable, ou
une détermination d'un côté de la plante où un degré clairsemé de répartition des branches et des feuilles est supérieur à un second seuil en tant que position d'irradiation cible de la source lumineuse contrôlable ;
lorsque les informations de croissance comprennent les informations sur la répartition des fleurs, une détermination d'un côté de la plante où des fleurs fleurissent en tant que position d'irradiation cible de la source lumineuse contrôlable.

9. Procédé selon l'une quelconque des revendications 6 à 8, dans lequel le procédé comprend en outre :
une détection (701), en utilisant un capteur infrarouge de corps humain, d'un signal infrarouge de corps humain dans un environnement ; et
lorsque le signal infrarouge de corps humain est détecté, un contrôle (702) de la source lumineuse contrôlable selon une manière de contrôle prédéterminée et/ou à contrôler le pot de fleur où pousse la plante, la manière de contrôle prédéterminée comprenant le réglage de la luminance de la source lumineuse contrôlable ou la contrôle de la source lumineuse contrôlable pour qu'elle clignote.

10. Programme informatique, comportant des instructions pour exécuter les étapes d'un procédé de contrôle de croissance de plante selon l'une quelconque des revendications 6 à 9 lorsque ledit programme est exécuté par un ordinateur.

11. Support d'enregistrement lisible par un ordinateur et ayant enregistré sur celui-ci un programme informatique comportant des instructions pour exécuter les étapes d'un procédé de contrôle de croissance de plante selon l'une quelconque des revendications 6 à 9.
